# EUROPÄISCHE PATENTSCHRIFT

(11) **EP 1 506 103 B1**
(45) Veröffentlichungstag und Bekanntmachung des Hinweises auf die Patenterteilung: **26.03.2008**
(21) Anmeldenummer: 03714900.2
(22) Anmeldetag: 28.03.2003
(51) Int. Cl.: B60J 7/20

(54) **ABDECKVORRICHTUNG FÜR EINEN VERDECKKASTEN EINES CABRIOLET-FAHRZEUGS**
COVER DEVICE FOR THE VEHICLE TOP STORAGE COMPARTMENT OF A CONVERTIBLE VEHICLE
DISPOSITIF DE COUVERTURE POUR LE LOGEMENT DE CAPOTE D'UN CABRIOLET

(30) Priorität: 18.05.2002 DE 10222189
(43) Veröffentlichungstag der Anmeldung: 16.02.2005
(73) Patentinhaber: Daimler AG, 70327 Stuttgart (DE)
(72) Erfinder: KUTTNER, Hans-Peter, 71093 Stuttgart (DE); SCHENK, Bernhard, 71034 Böblingen (DE)
(86) Internationale Anmeldenummer: PCT/EP2003/003260
(87) Internationale Veröffentlichungsnummer: WO 2003/097392

(56) Entgegenhaltungen:
- DE-A- 10 050 286
- DE-A- 10 051 615
- DE-A- 19 712 967
- DE-C- 19 637 005

## Beschreibung

Die vorliegende Erfindung betrifft eine Abdeckvorrichtung für einen zur Verstauung eines Fahrzeugdachs dienenden Verdeckkasten eines Cabriolet-Fahrzeugs, mit den Merkmalen des Oberbegriffs des Anspruchs 1.

Die DE 100 50 286 A1 offenbart so eine Abdeckvorrichtung.

Eine derartige Abdeckvorrichtung ist auch aus der DE 44 46 483 C2 bekannt und besitzt einen Deckel, der zwischen einer Schließstellung und einer Offenstellung um eine quer zur Fahrzeuglängsachse und horizontal verlaufende Deckelachse schwenkverstellbar gelagert ist. In seiner Schließstellung erstreckt sich der Deckel im wesentlichen in einer horizontalen Ebene und verschließt dabei eine Verdeckkastenöffnung. In seiner Offenstellung ist der Deckel gegenüber der horizontalen Ebene geneigt, wobei er die Verdeckkastenöffnung öffnet bzw. freigibt. An quer zur Fahrzeuglängsachse einander gegenüberliegenden Seiten des Deckels sind zwei Seitenklappen angeordnet, die jeweils zwischen einer Passivstellung und einer Aktivstellung verstellbar sind. Bei in seine Schließstellung verstelltem Deckel öffnen die Seitenklappen in ihrer Passivstellung jeweils eine Durchgangsöffnung, die an jeder Fahrzeugseite seitlich an den Deckel angrenzt und für das geschlossene Fahrzeugdach benötigt wird, um eine Dachkomponente, z.B. eine sogenannte C-Säule aus dem Verdeckkasten herauszuführen. In ihrer Passivstellung befinden sich die Seitenklappen oberhalb des Deckels, sind über den Deckel eingeschwenkt und erstrecken sich parallel dazu. In ihrer Aktivstellung schließen die Seitenklappen die Durchgangsöffnungen, sofern sich der Deckel in seiner Schließstellung befindet. In der Aktivstellung erstrecken sich die Seitenklappen in der Ebene des Deckels, d.h. die Seitenklappen und der Deckel erstrecken sich in derselben Ebene.

Die bekannte Abdeckvorrichtung besitzt eine erste Antriebseinrichtung, die den Deckel zur Schwenkverstellung um seine Deckelachse antreibt. Für die Verstellung der Seitenklappen ist eine zweite Antriebseinrichtung vorgesehen, welche die Seitenklappen zur Schwenkverstellung jeweils um eine zugehörige Klappenachse antreibt, die jeweils senkrecht zum Deckel verläuft. Die zweite Antriebseinrichtung weist für jede Seitenklappe einen mit dem Deckel verschwenkbaren Schwenkbock auf, an dem ein zylindrischer Bolzen befestigt ist. Auf diesen Bolzen ist eine zylindrische Kulissenhülse aufgesteckt, in deren Wandung eine Führungsnut eingearbeitet ist. In diese Führungsnut greift ein Lenkstift des Schwenkbocks ein. Darüber hinaus ist ein Umlenkhebel am Schwenkbock gelagert, der einenends in einen an der Kulissenhülse ausgebildeten Führungsring eingreift und anderenends mit einem Bowdenzug antreibbar ist. Der Bowdenzug ist an seinem anderen Ende mit einem Zughebel verbunden, der mit Hilfe einer Kulissenführung betätigt wird. Diese Kulissenführung ist fest mit einem Schlitten verbunden, an dem der Deckel gelagert ist und mit dem Deckel in Fahrzeuglängsrichtung verstellbar ist. Auf diese Weise wird eine kinematische Kopplung erreicht, die bei einer Verstellung des Deckels in Fahrzeuglängsrichtung über die Kulissenführung den Zughebel verschwenkt, der dadurch über den Bowdenzug den Umlenkhebel verschwenkt, wodurch dieser eine Hubverstellung der Kulissenhülse bewirkt, die durch den in die Führungsnut eingreifenden Lenkstift eine Drehung der Kulissenhülse und der daran befestigten Seitenklappe erzeugt.

Aus der DE 196 37 005 C1 ist eine weitere Abdeckvorrichtung bekannt, bei der ein Deckel ebenfalls seitlich angeordnete Seitenklappen besitzt. Bei dieser Abdeckvorrichtung sind die Seitenklappen jeweils über ein Scharnierband am Deckel um eine in der Ebene des Deckels verlaufende Schwenkachse am Deckel gelagert. Der Antrieb erfolgt dabei über ein mehrfach umgelenktes Spannseil, das mit einer Antriebseinrichtung zum Verstellen des Deckels kinematisch gekoppelt ist. Die Rückstellung erfolgt durch entsprechende Federmittel.

Aus der DE 298 12 165 U1 ist eine weitere Abdeckvorrichtung bekannt, bei der an den Seiten des Deckels Seitenklappen angeordnet sind. Diese Seitenklappen dienen dabei sowohl bei geöffnetem Fahrzeugdach als auch bei geschlossenem Fahrzeugdach zum Verschließen von seitlich an den Deckel angrenzenden Öffnungen. Dementsprechend befinden sich diese Seitenklappen immer dann in ihrer Aktivstellung, wenn sich der Deckel in seiner Schließstellung befindet, unabhängig davon, ob das Fahrzeugdach geöffnet oder geschlossen ist. Lediglich in der Offenstellung des Deckels sind die Seitenklappen unterhalb des Deckels eingeschwenkt. Zum Antrieb der Seitenklappen ist für jede Seitenklappe an der Unterseite des Deckels eine Lagerwelle um ihre Längsachse drehbar gelagert, die drehfest mit der jeweiligen Seitenklappe verbunden ist. Des Weiteren ist an der jeweiligen Lagerwelle ein Stützhebel gelagert, der die jeweiligen Seitenklappe unterstützt.

Die vorliegende Erfindung beschäftigt sich mit dem Problem, für eine Abdeckvorrichtung der eingangs genannten Art eine verbesserte Ausführungsform anzugeben, die insbesondere einen besonders preiswert realisierbaren Aufbau besitzt.

Dieses Problem wird durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, die Schwenkverstellung der Seitenklappen von deren Hubverstellung zu entkoppeln und gleichzeitig die Hubverstellung der Seitenklappen zwangsweise mit der Schwenkverstellung des Deckels zu koppeln. Auf diese Weise kann die für die Verstellung der Seitenklappen vorgesehene Antriebseinrichtung vergleichsweise einfach aufgebaut werden, da diese nur noch das Verschwenken der Seitenklappen realisieren muss. Erreicht wird dies durch entsprechend ausgestaltete Lageranordnungen, die so ausgebildet sind, dass die Hubverstellung und die Schwenkverstellung der Seitenklappen voneinander entkoppelt sind. Außerdem erfolgt die Lagerung bzw. Anordnung der Seitenklappen so, dass die Hubverstellung der Seitenklappen beim Öffnen des Deckels bzw. beim Schließen des Deckels selbsttätig erfolgt.

Bei einer bevorzugten Ausführungsform kann das Absenken der Seitenklappen bzw. deren Hubverstellung beim Öffnen des Deckels mittels Schwerkraft oder durch Federkraft einer Feder oder durch Widerstandskraft eines Anschlags oder einer Führungskulisse, wie z.B. einer Bahnkurve, erfolgen.

Zweckmäßig ist die zur Durchführung der Schwenkverstellung der Seitenklappen vorgesehene zweite Antriebseinrichtung mit dem Deckel und/oder mit der zur Schwenkverstellung des Deckels vorgesehenen ersten Antriebseinrichtung direkt oder indirekt antriebsgekoppelt, derart, dass bei einer Verstellung des Deckels die Seitenklappen zwangsläufig angetrieben sind.

Die Integration der Hubverstellung der Seitenklappen in die Kinematik des Deckels erfolgt nach der Erfindung mittels zwei Dreh-Schiebe-Lagern, über welche die Seitenklappen am Deckel gelagert sind. Diese Dreh-Schiebe-Lager umfassen jeweils einen Bolzen, der in einer Hülse drehbar und axial verstellbar gelagert ist. Durch die Anbringung der Dreh-Schiebe-Lager an der Unterseite des Deckels sind die Seitenklappen durch die Schwerkraft zumindest bei kleinen Winkeln zwischen dem Deckel und einer horizontalen Ebene in eine gegenüber dem Deckel abgesenkte Position angetrieben. Beim Herunterschwenken des Deckels bewirken die den Seitenklappen zugeordneten Auflager, dass die

Seitenklappen relativ zu den Auflagern stehen bleiben, während der Deckel weiter herunterschwenkt. Hierdurch werden die Seitenklappen in ihrer Aktivstellung auf das Niveau des Deckels angehoben bzw. wird der Deckel auf das Niveau der Seitenklappen abgesenkt. Beim Hochschwenken des Deckels erfolgt die kinematische Umkehr, so dass sich der Deckel zunächst gegenüber den Seitenklappen anhebt und diese erst dann mitnimmt, wenn die durch einen entsprechenden Anschlag begrenzte maximale Auszugslänge der Dreh-Schiebe-Lager erreicht ist.

Bei einer bevorzugten Weiterbildung kann der Deckel zwischen einer vorderen Position, in welcher der Deckel bei geschlossenem Fahrzeugdach eine vordere Schließstellung einnimmt, in welcher der Deckel einen bezüglich der Fahrtrichtung hinten an den Deckel angrenzenden und für das geschlossene Fahrzeugdach benötigten Durchgangsspalt öffnet, und einer hinteren Position verstellbar sein, in welcher der Deckel bei geöffnetem Fahrzeugdach eine bezüglich der Fahrtrichtung hintere Schließstellung einnimmt, in welcher der Deckel den Durchgangsspalt schließt. Durch den so gebildeten Durchgangsspalt kann ein bezüglich der Fahrtrichtung hinterer Abschnitt des Fahrzeugdachs aus dem Verdeckkasten herausgeführt werden. Dies ist insbesondere dann von Vorteil, wenn es sich beim Fahrzeugdach um ein sogenanntes "Hardtop" handelt, das beweglich bzw. ein- und ausklappbar ist.

Bei einer Weiterbildung kann die erste Antriebseinrichtung den Deckel zum Verstellen zwischen der vorderen Position und der hinteren Position im wesentlichen in Fahrzeuglängsrichtung antreiben, wobei dann die zweite Antriebseinrichtung zweckmäßig mit der ersten Antriebseinrichtung derart kinematisch gekoppelt ist, dass ein Verstellen des Deckels von dessen hinterer Position in dessen vordere Position die jeweilige Seitenklappe in deren Passivstellung einschwenkt und ein Verstellen des Deckels von dessen vorderer Position in dessen hintere Position die jeweilige Seitenklappe in deren Aktivstellung ausschwenkt. Durch diese Maßnahme wird die zweite Antriebseinrichtung quasi in die erste Antriebseinrichtung integriert, wobei die Betätigung der zweiten Antriebseinrichtung mit der Schiebeverstellung des Deckels durch die erste Antriebseinrichtung gekoppelt ist. Dies ist besonders zweckmäßig, da einerseits eine Schwenkverstellung der Seitenklappen nur dann erforderlich ist, wenn die seitlichen Durchgangsöffnungen geöffnet bzw. geschlossen werden müssen, also wenn für das Öffnen bzw. für das Schließen des Fahrzeugdachs auch der hintere Durchgangsspalt geöffnet bzw. geschlossen werden muss. Andererseits ergibt sich durch diese Maßnahme eine erhebliche Vereinfachung für den Aufbau der zweiten Antriebseinrichtung.

Zweckmäßig ist das Auflager für die jeweilige Seitenklappe durch eine am Rand der zugehörigen Durchgangsöffnung ausgebildete Stufe gebildet. Eine derartige Stufe kann bereits bei der Herstellung des den Rand aufweisenden Verkleidungsteils berücksichtigt werden, so dass für die Realisierung der Auflager im wesentlichen kein zusätzlicher Aufwand anfällt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Draufsicht auf einen Heckbereich eines im Übrigen nicht dargestellten Cabriolet-Fahrzeugs, das mit einer erfindungsgemäßen Abdeckvorrichtung ausgestattet ist, bei geöffnetem Fahrzeugdach,
- Fig. 2: eine Ansicht wie in Fig. 1, jedoch bei geschlossenem Fahrzeugdach,
- Fig. 3 bis 6: stark vereinfachte Prinzipdarstellungen der Abdeckvorrichtung in einer Seitenansicht bei unterschiedlichen Zuständen.

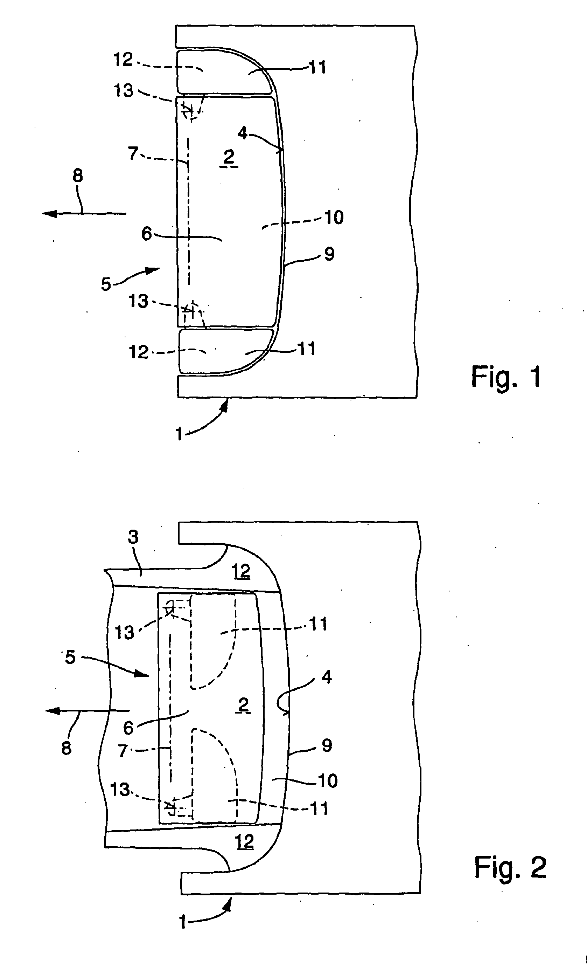

Entsprechend den Fig. 1 und 2 besitzt ein Cabriolet-Fahrzeug 1 in einem hier dargestellten Heckbereich einen Verdeckkasten 2, der zur Unterbringung eines Fahrzeugdachs 3 dient. Dieses Fahrzeugdach 3 kann als sogenanntes "Softtop" ausgebildet sein und dementsprechend im wesentlichen aus einem Gewebe bestehen. Ebenso ist es möglich, das Fahrzeugdach als "Hardtop" auszubilden, so dass es im wesentlichen aus Schalenelementen besteht.

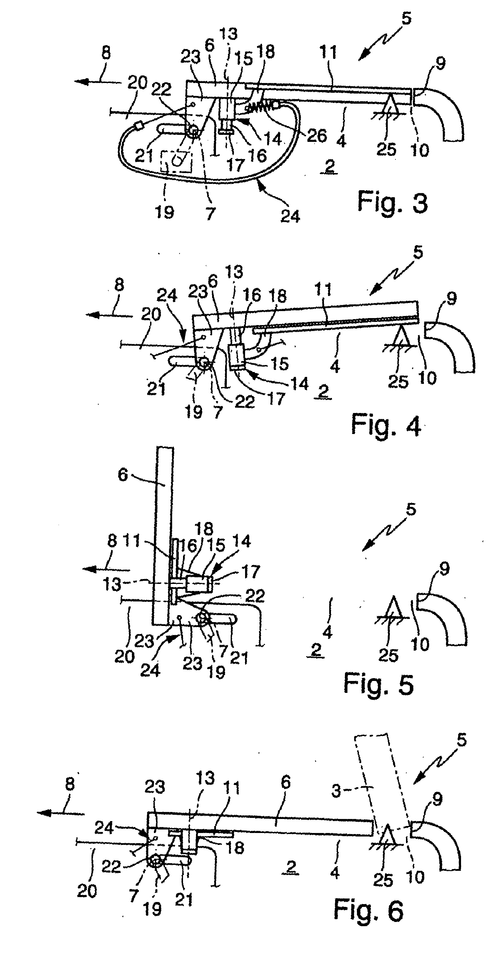

Der Verdeckkasten 2 besitzt eine Verdeckkastenöffnung 4, durch die das Fahrzeugdach 3 in den Verdeckkasten 2 hinein bzw. aus dem Verdeckkasten 2 heraus verstellbar ist. Das Fahrzeug 1 ist mit einer Abdeckvorrichtung 5 nach der Erfindung ausgestattet, die einen Deckel 6 aufweist, der einteilig oder mehrteilig gebildet sein kann. In der hier gezeigten Ausführungsform ist der Deckel 6 einteilig ausgebildet. Der Deckel 6 ist zwischen einer in den Fig. 1,2,3 und 6 gezeigten Schließstellung und einer in Fig. 5 gezeigten Offenstellung um eine Deckelachse 7 schwenkverstellbar gelagert. Diese Deckelachse 7 verläuft dabei im wesentlichen horizontal sowie quer zu einer Fahrzeuglängsachse 8. Dementsprechend liegt die Deckelachse 7 in den Fig. 1 und 2 jeweils in der Zeichnungsebene, während sie in den Fig. 3 bis 6 senkrecht auf der Zeichnungsebene steht.

Gemäß den Fig. 1 und 2 verschließt der Deckel 2 in seiner Schließstellung die Verdeckkastenöffnung 4 und erstreckt sich dabei im wesentlichen in einer horizontalen Ebene, die in den Fig. 1 und 2 parallel zur Zeichnungsebene verläuft. In seiner Schließstellung kann der Deckel 6 als Hutablage genutzt werden.

Wie aus den Fig. 1 und 2 hervorgeht, ist der Deckel 6 außerdem zwischen einer in den Fig. 1,3 und 4 gezeigten hinteren Position und einer in den Fig. 2,5 und 6 gezeigten vorderen Position in der Fahrzeuglängsrichtung 8 verstellbar. Die Begriffe "vorne" und "hinten" beziehen sich dabei auf die Fahrtrichtung des Fahrzeugs. Bei geschlossenem Fahrzeugdach 3 wird zwischen dem Deckel 6 und einer Berandung 9 der Verdeckkastenöffnung 4 ein hinterer Durchgangsspalt 10 benötigt, um durch diesen Durchgangsspalt 10 einen hinteren Abschnitt des Fahrzeugdachs 3 aus dem Verdeckkasten 2 herausführen und positionieren zu können. Dementsprechend gibt der Deckel 6 in seiner vorderen Schließstellung gemäß den Fig. 2 und 6 diesen Durchgangsspalt 10 frei bzw. öffnet diesen. Im Unterschied dazu wird der Durchgangsspalt 10 bei geöffnetem Fahrzeugdach 3 nicht benötigt. Dementsprechend verschließt der Deckel 6 in seiner hinteren Schließstellung gemäß den Fig. 1 und 3 diesen Durchgangsspalt 10.

Die Abdeckvorrichtung 5 weist außerdem zwei Seitenklappen 11 auf, die an quer zur Fahrzeuglängsachse 8 einander gegenüberliegenden Seiten des Deckels 6 angeordnet sind. Diese Seitenklappen 11 sind jeweils zwischen einer in den Fig. 1,3 und 4 gezeigten Aktivstellung und einer in den Fig. 2,5 und 6 gezeigten Passivstellung verstellbar. In ihrer Aktivstellung verschließen die Seitenklappen 11 gemäß Fig. 1 jeweils eine Durchgangsöffnung 12, die jeweils seitlich, also quer zur Fahrzeuglängsrichtung 8 an den Deckel 6 angrenzen, wenn sich dieser in seiner Schließstellung befindet. Diese Durchgangsöffnungen 12 werden für das geschlossene Fahrzeugdach 3 benötigt, um auch hier seitlich angeordnete, hintere Abschnitte, insbesondere C-Säulen aus dem Verdeckkasten 2 herauszuführen. Dementsprechend befinden sich die Seitenklappen 11 bei geöffnetem Fahrzeugdach 3 gemäß Fig. 1 in ihrer Aktivstellung, um die seitlichen Durchgangsöffnungen 12 zu verschließen. Im Unterschied dazu werden die Durchgangsöffnungen 12 bei geschlossenem Fahrzeugdach 3 gemäß Fig. 2 benötigt, wozu die Seitenklappen 11 in ihre Passivstellung verstellt sind, in der sie die seitlichen Durchgangsöffnungen 12 freigeben bzw. öffnen. Darüber hinaus erstrecken sich die Seitenklappen 11 auch in ihrer Passivstellung parallel zum Deckel 6, wobei die Seitenklappen 11 unter den Deckel 6 eingeschwenkt sind. D.h., die Seitenklappen 11 sind in ihrer Passivstellung bei der Draufsicht gemäß Fig. 2 durch den Deckel 6 verdeckt und benötigen somit im Fahrzeuginnenraum keinen wertvollen Stauraum.

Des weiteren erstrecken sich die Seitenklappen 11 in ihrer Aktivstellung gemäß Fig. 1 im wesentlichen in der Ebene des Deckels 6, wodurch sich für die Verdeckkastenöffnung 4 eine formintegrierte Gesamtabdeckung ergibt.

Um die Seitenklappen 11 zwischen ihrer Passivstellung und ihrer Aktivstellung verstellen zu können, sind die Seitenklappen 11 zum einen jeweils um eine Klappenachse 13 schwenkbar gelagert, wobei jede Klappenachse 13 senkrecht zum Deckel 6 verläuft. Dementsprechend verlaufen die Klappenachsen 13 in den Fig. 1 und 2 senkrecht zur Zeichnungsebene, während sie in den Fig. 3 bis 6 jeweils in der Zeichnungsebene liegen.

Da sich die Seitenklappen 11 in ihrer Aktivstellung gemäß Fig. 1 in derselben Ebene erstrecken wie der Deckel 6 und in ihrer Passivstellung gemäß Fig. 2 unterhalb des Deckels 6 angeordnet sind, ist auch eine Hubverstellung zwischen Deckel 6 und Seitenklappen 11 erforderlich.

Entsprechend den Fig. 3 bis 6 ist jede Seitenklappe 11 über eine Lageranordnung am Deckel 6 gelagert, die in der hier gezeigten bevorzugten Ausführungsform jeweils als Dreh-Schiebe-Lager 14 ausgebildet sind. Ein derartiges Dreh-Schiebe-Lager 14 besteht aus einer zylindrischen Hülse 15 und aus einem zylindrischen Bolzen 16, auf den die Hülse 15 konzentrisch aufgesetzt ist. Bolzen 16 und Hülse 15 sind dabei aufeinander so abgestimmt, dass die Hülse 15 am Bolzen 16 drehbar und axial verschiebbar gelagert ist.

Bei der hier gezeigten bevorzugten Ausführungsform ist der Bolzen 16 an der Unterseite des Deckels 6 befestigt und steht von dieser im wesentlichen senkrecht ab. Am freien Ende des Bolzens 16 ist ein scheibenförmiger Anschlag 17 ausgebildet, der die axiale Verschiebbarkeit der Hülse 15 begrenzt. Die Hülse 15 ist über einen Arm 18 fest mit der zugehörigen Seitenklappe 11 verbunden. Hülse 15 und Bolzen 16 definieren die jeweilige Klappenachse 13, die dementsprechend konzentrisch zu Hülse 15 und Bolzen 16 verläuft.

Zum Verstellen des Deckels 6 ist eine erste Antriebseinrichtung 19 vorgesehen, die in den Fig. 3 bis 6 nur andeutungsweise dargestellt ist und grundsätzlich beliebig aufgebaut sein kann. Diese erste Antriebseinrichtung 19 ist so ausgebildet, dass sie einerseits die Schwenkverstellung des Deckels 6 um seine Deckelachse 7 ermöglicht und andererseits auch zum Verschieben des Deckels 6 in Richtung der Fahrzeugslängsachse 8 dient. Beispielsweise umfasst die erste Antriebseinrichtung 19 zu diesem Zweck eine Lagerkonsole 20, in der ein Langloch ausgebildet ist, das parallel zur Fahrzeuglängsache 1 verläuft und in dem eine konzentrisch zur Deckelachse 7 verlaufende Welle 22 verschiebbar gelagert ist. An dieser Welle 22 ist dann über Laschen 23 der Deckel 6 gelagert.

Zum Verstellen der Seitenklappen 11 ist eine zweite Antriebseinrichtung 24 vorgesehen, die so ausgebildet ist, dass sie ausschließlich eine Drehverstellung der jeweiligen Seitenklappe 11 um die zugehörige Klappenachse 13 realisieren kann. Beispielsweise ist diese zweite Antriebseinrichtung 24 durch einen Bowdenzug gebildet, der in geeigneter Weise angeordnet ist. Der gezeigte Bowdenzug kann mit einer Rückstellfeder 26 ausgestattet sein, die an geeigneter Stelle montiert ist.

Während somit die Drehbarkeit der Hülse 15 am Bolzen 16 durch die zweite Antriebseinrichtung 24 vorgegeben ist, kann die Hülse 15 in axialer Richtung entlang des Bolzens 16 grundsätzlich frei zwischen dem Anschlag 17 und der Unterseite des Deckels 6 verstellt werden.

Darüber hinaus ist im Bereich jeder Durchgangsöffnung 12 für die jeweilige Seitenklappe 11 zumindest ein feststehendes, also bezüglich des Verdeckkastens 2 ortsfestes Auflager 25 vorgesehen, auf dem die zugeordnete Seitenklappe 11 in ihrer Aktivstellung bei geschlossenem Verdeckkasten 2 aufliegt. Dieser Zustand ist in Fig. 3 wiedergegeben.

Ein derartiges Auflager 25 kann beispielsweise in die Berandung 9 der Verdeckkastenöffnung 4 integriert sein, beispielsweise, in dem an der Berandung 9 eine in die Verdeckkastenöffnung 4 hineinragende Stufe ausgebildet ist, auf der die Seitenklappe 11 zur Auflage kommt.

Die erfindungsgemäße Abdeckvorrichtung 5 funktioniert wie folgt:

Im Zustand gemäß Fig. 3 ist das Fahrzeugdach 3 im Verdeckkasten 2 verstaut, das heißt, das Fahrzeugdach 3 ist geöffnet. Der Verdeckkasten 2 bzw. seine Verdeckkastenöffnung 4 ist durch den Deckel 6 verschlossen, wobei sich der Deckel 6 in seiner hinteren Schließstellung befindet, um dadurch auch den Durchgangsspalt 10 zu schließen. Die Seitenklappen 11 befinden sich in ihrer Aktivstellung und verschließen dementsprechend die seitlichen Durchgangsöffnungen 12. Zum Schließen des Fahrzeugdachs 3 muss nun zunächst die Verdeckkastenöffnung 4 freigegeben werden. Hierzu treibt die erste Antriebseinrichtung 19 den Deckel 6 so an, dass dieser zunächst um seine Deckelachse 7 hochschwenkt. Da die Seitenklappen 11 an den Bolzen 16 axial frei verstellbar gelagert sind, bleiben sie am Anfang der Schwenkbewegung des Deckels 6 auf ihrem jeweiligen Auflager 25 liegen. Durch die Schwerkraftwirkung und/oder durch Federkraft können die Seitenklappen 11 entlang der Bolzen 16 nach unten abgleiten, wenn der Deckel 6 nach oben schwenkt. Da sich beim Verschwenken des Deckels 6 auch die Raumlage der Bolzen 16 ändert, werden dadurch auch die Seitenklappen 11 entsprechend geschwenkt bzw. gekippt. Fig. 4 gibt den Zustand wieder, bei dem die Seitenklappen 11 beim Hochschwenken des Deckels 6 gerade noch mit ihren Auflagern 25 in Kontakt stehen bzw. beim Herunterschwenken des Deckels 6 gerade mit ihrem jeweiligen Auflager 25 in Kontakt treten.

Durch die axial freie Beweglichkeit zwischen Hülse 15 und Bolzen 16 erfolgt die Hubverstellung der Seitenklappen 11 zum Absenken aus der in Fig. 3 gezeigten angehobenen Position, in der sich die Oberseiten des Deckels 6 und der Seitenklappen 11 etwa in einer Ebene, also auf gleichem Niveau erstrecken, in die in Fig. 4 wiedergegebene abgesenkte Position, in welcher sich die Seitenklappen 11 unterhalb des Deckels 6 befinden, durch die Schwerkraftwirkung und/oder Federkraft quasi von selbst, wenn der Deckel 6 nach oben schwenkt. In entsprechender Weise erfolgt auch die Hubverstellung zum Anheben der Seitenklappen 11 von der unteren Position gemäß Fig. 4 in die obere Position gemäß Fig. 3 quasi von selbst, wenn die Seitenklappen 11 in der Endphase des Herunterschwenkens des Deckels 6 auf ihren jeweiligen Auflagern 25 zur Auflage kommen, wodurch diese ein weiteres Absenken der Seitenklappen 11 behindern, so dass die Seitenklappen 11 gegenüber dem Deckel 6 angehoben werden, wenn dieser weiter herunterschwenkt.

Durch die beschriebene Bauweise sind keine gesonderten Antriebsmittel für die Hubverstellung der Seitenklappen 11 gegenüber dem Deckel 6 erforderlich, wodurch die erfindungsgemäße Abdeckvorrichtung 5 besonders preiswert realisierbar ist.

Beim Übergang zwischen den Schwenkpositionen der Fig. 4 und 5 erfolgt außerdem eine Längsverschiebung des Deckels 6 in Richtung der Fahrzeuglängsachse 8. In der in Fig. 5 gezeigten Offenstellung des Deckels 6 befindet sich dieser somit auch in seiner vorderen Position. Diese Längsverstellung wird ebenfalls durch die erste Antriebseinrichtung 19 bewirkt. Entsprechend einer zweckmäßigen Ausführungsform ist die zweite Antriebseinrichtung 24 so mit der ersten Antriebseinrichtung 19 gekoppelt, dass sich bei dieser Längsverstellung zwangsläufig die gewünschte Drehverstellung der Seitenklappen 11 um deren Klappenachsen 13 ergibt. Erreicht wird dies beispielsweise durch einen entsprechend montierten Bowdenzug.

Durch diese Zwangskopplung der Antriebseinrichtungen 19 und 24 ist gewährleistet, das die Seitenklappen 11 in der vorderen Position des Deckels 6 entsprechend den Fig. 5 und 6 ihre Passivstellung einnehmen, in der sie unter den Deckel 6 eingeschwenkt sind.

In dieser Offenstellung des Deckels 6 kann das Fahrzeugdach 3 aus dem Verdeckkasten 2 heraus verstellt, bzw. in den Verdeckkasten 2 hineinverstellt werden.

Wenn nun anschließend der Deckel 6 in seiner vorderen Position heruntergeschwenkt wird, verbleiben die Seitenklappen 11 in ihrer Passivstellung, so dass in der vorderen Schließstellung des Deckels 6 gemäß Fig. 6 die seitlichen Durchgangsöffnungen 12 und der hintere Durchgangsspalt 10 für das Fahrzeugdach 3 frei bzw. geöffnet sind.

Entsprechendes gilt, wenn der Deckel 6 von seiner vorderen Position gemäß den Fig. 5 und 6 in seine hintere Position gemäß der Fig. 3 und 4 zurückverstellt wird: Die Zwangskopplung der Kinematik des Deckels 6 mit der Kinematik der Seitenklappen 11 erzwingt beim Zurückfahren des Deckels 6 in seine hintere Position ein Ausschwenken der Seitenklappen 11 in ihre Aktivstellung bzw. in eine Zwischenstellung, aus der sie in ihre Aktivstellung relativ zum Deckel 6 angehoben werden können.

## Patentansprüche

1. Abdeckvorrichtung für einen zur Verstauung eines Fahrzeugsdachs (3) dienenden Verdeckkasten (2) eines Cabriolet-Fahrzeugs (1),
- mit einem Deckel (6), der zwischen einer Schließstellung, in der er sich im wesentlichen in einer horizontalen Ebene erstreckt und eine Verdeckkastenöffnung (4) schließt, und einer Offenstellung, in der er gegenüber der horizontalen Ebene geneigt ist und die Verdeckkastenöffnung (4) öffnet, um eine quer zur Fahrzeuglängsachse (8) und horizontal verlaufende Deckelachse (7) schwenkverstellbar gelagert ist,
- mit zwei an quer zur Fahrzeuglängsachse (8) einander gegenüberliegenden Seiten des Deckels (6) angeordneten Seitenklappen (11), die zwischen einer Passivstellung, in der sie in der Schließstellung des Deckels (6) an jeder Fahrzeugseite jeweils eine seitlich an den Deckel (6) angrenzende und für das geschlossene Fahrzeugdach (3) benötigte Durchgangsöffnung (12) öffnen und sich über oder unter den Deckel (6) eingeschwenkt parallel dazu erstrecken, und einer Aktivstellung verstellbar sind, in der sie in der Schließstellung des Deckels (6) die Durchgangsöffnungen (12) schließen und sich in der Ebene des Deckels (6) erstrecken,
- mit einer ersten Antriebseinrichtung (19), die den Deckel (6) zur Schwenkverstellung um die Deckelachse (7) antreibt,
- mit einer zweiten Antriebseinrichtung (24), die wenigstens eine der Seitenklappen (11) zur Schwenkverstellung um eine zugehörige, senkrecht zum Deckel (6) verlaufende Klappenachse (13) antreibt,
- wobei die beiden Seitenklappen (11) jeweils über eine Lageranordnung (14) am Deckel (6) gelagert sind, derart, dass jede Seitenklappe (11) gegenüber dem Deckel (6) absenkbar ist und in der abgesenkten Position um die zugehörige Klappenachse (13) verschwenkbar ist,
- wobei die zweite Antriebseinrichtung (24) die Seitenklappen (11) ausschließlich zur Schwenkverstellung um die Klappenachsen (13) antreibt,
- wobei die Seitenklappen (11) so gelagert und angeordnet sind, dass das Absenken der Seitenklappen (11) beim Öffnen des Deckels (6) von selbst erfolgt,
**dadurch gekennzeichnet,**
- **dass** die Lageranordnungen jeweils als Dreh-Schiebe-Lager (14) ausgebildet sind,
- **dass** die Dreh-Schiebe-Lager (14) jeweils eine zylindrische Hülse (15) aufweisen, die axial verschiebbar und drehbar auf einen zylindrischen Bolzen (16) aufgesteckt ist,
- **dass** die Hülse (15) oder der Bolzen (16) an der Unterseite des Deckels (6) befestigt ist und senkrecht davon absteht, während der Bolzen (16) oder die Hülse (15) an der jeweiligen Seitenklappe (11) befestigt ist,
- **dass** Bolzen (16) und Hülse (15) jeweils konzentrisch zu einer der Klappenachsen (13.) angeordnet sind,
- **dass** die jeweilige Hülse (15) am zugehörigen Bolzen (16) axial frei verstellbar angeordnet ist,
- **dass** im Bereich der Durchgangsöffnungen (12) für jede Seitenklappe (11) wenigstens ein feststehendes Auflager (25) vorgesehen ist, auf dem die jeweilige, in ihre Aktivstellting verschwenkte Seitenklappe (11) beim Absenken des Deckels (6) in die Schließstellung zu Auflage kommt und der dabei die Seitenklappe (11) entlang der Klappenachse (13) in die Ebene des Deckels (6) anhebt.

2. Abdeckvorrichtung nach Anspruch 1,
**dadurch gekennzeichnet,**
**dass** die Seitenklappen (11) so gelagert und angeordnet sind, dass das Absenken der Seitenkläppen (11) beim Öffnen des Deckels (16) durch Schwerkraft, Federkraft einer Feder oder durch Widerstandskraft eines Anschlags oder einer Führungskulisse erfolgt.

3. Abdeckvorrichtung nach Anspruch 1 oder 2,
**dadurch gekennzeichnet**
**dass** die zweite Antriebseinrichtung (24) mit dem Deckel (6) und/oder mit der ersten Antriebseinrichtung (19) direkt oder indirekt antriebsgekoppelt ist, so dass bei einer Verstellung des Deckels (6) die Seitenklappen (11) zwangsläufig angetrieben sind.

4. Abdeckvorrichtung nach einem der Ansprüche 1 bis 3,
**dadurch gekennzeichnet**
**dass** der Deckel-(6) zwischen einer vorderen Position, in welcher der Deckel (6) bei geschlossenem Fahrzeugdach (3) eine vordere Schließstellung einnimmt, in welcher der Deckel (6) einen hinten an den Deckel (6) angrenzenden-und für das geschlossene Fahrzeugdach (3) benötigten Durchgangsspalt (10) öffnet, und einer hinteren Position verstellbar ist, in welcher der Deckel (6) bei geöffnetem Fahrzeugdach (3) eine hintere Schließstellung einnimmt, in welcher der Deckel (6) den Durchgangsspalt (1,0) schließt.

5. Abdeckvorrichtung nach Anspruch 4,
**dadurch gekennzeichnet,**
- **dass** die erste Antriebseinrichtung (19) den Deckel (6) zum Verstellen zwischen der vorderen Position und der hinteren Position im wesentlichen in Richtung der Fahrzeuglängsachse (8) antreibt,
- **dass** die zweite Antriebseinrichtung (24) mit der ersten Antriebseinrichtung (19) kinematisch gekoppelt ist, derart, dass ein verstellen des Deckels (6) von dessen hinteren Position in dessen vordere Position die jeweilige Seitenklappe (11) in deren Passivstellung einschwenkt und ein Verstellen des Deckels (6) von dessen vorderen Position in dessen hintere Position, die jeweilige Seitenklappe (11) in deren Aktivstellung ausschwenkt.

6. Abdeckvorrichtung nach einem der Ansprüche 1 bis 5,
**dadurch gekennzeichnet ,**
**dass** das Auflager (25) durch an einer Berandung (9) der Durchgangsöffnung (12) ausgebildete Stufe gebildet ist.

## Claims

1. Cover device for a stowage compartment (2) for the vehicle top (3) of a convertible vehicle (1),
- with a cover (6) which is mounted to pivot about a cover axis (7) that extends transversely to the longitudinal axis (8) of the vehicle and horizontally, between a closed position in which it extends substantially in a horizontal plane and closes a stowage compartment opening (4), and an open position in which it is inclined relative to the horizontal plane and opens the stowage compartment opening (4),
- with two lateral flaps (11) arranged on sides of the cover (6) opposite one another transversely to the vehicle's longitudinal axis (8), which can be moved between a passive position in which, in the closed position of the cover (6), they open on each side of the vehicle a respective passage opening (12) laterally adjacent to the cover (6) which is required for the closed vehicle top (3) and swivel inwards over or under the cover (6) to extend parallel thereto, and an active position in which, in the closed position of the cover (6), they close the said passage openings (12) and extend in the plane of the cover (6),
- with a first drive mechanism (19) which drives the cover (6) in its pivoting movement about the cover axis )7),
- and with a second drive mechanism (24) which drives at least one of the lateral flaps (11) in its swivelling movement about an associated flap axis (13) that extends perpendicularly to the cover (6),
- such that the two lateral flaps (11) are respectively mounted by means of a mounting arrangement (14) on the cover (6) in such manner that each lateral flap (11) can be lowered relative to the cover (6) and, in the lowered position, can be pivoted about the associated flap axis (13),
- such that the second drive mechanism (24) drives the lateral flaps (11) exclusively for their pivoting movement about the flap axes (13),
- and such that the lateral flaps (11) are mounted and arranged in such manner that when the cover (6) is opened, the lateral flaps (11) are lowered automatically,
**characterised in that**
- the mounting arrangements are in each case made as rotary slide bearings (14),
- the rotary slide bearings (14) each have a cylindrical sleeve (15) which is fitted to move axially and to rotate on a cylindrical pivot-stud (16),
- the sleeve (15) or pivot-stud (16) is fixed on the underside of the cover (6) and projects perpendicularly therefrom, while the pivot-stud (16) or sleeve (15) is attached to the respective lateral flap (11),
- the pivot-stud (16) and sleeve (15) are each arranged concentrically with one of the flap axes (13),
- in each case the sleeve (15) is arranged so that it can move freely axially on its associated pivot-stud (16),
- and in the area of the passage openings (120 for each lateral flap (11) at least one fixed abutment (25) is provided, against which, when the cover (6) is lowered to its closed position, the respective lateral flap (11) swivelled to its active position comes in contact, and which thereby raises the lateral flap (11) along the flap axis (13) into the plane of the cover (6).

2. Cover device according to Claim 1,
**characterised in that**
the lateral flaps (11) are mounted and arranged so that when the cover (6) is opened, the lowering of the lateral flaps (11) takes place by virtue of gravity, the force of a spring, or the resistance force of an abutment or a sliding guide.

3. Cover device according to Claims 1 or 2,
**characterised in that**
the second drive mechanism (24) is directly or indirectly drive-coupled with the cover (6) and/or with the first drive mechanism (19), so that when the cover (6) is moved the lateral flaps (11) are necessarily driven as well.

4. Cover device according to any of Claims 1 to 3,
**characterised in that**
the cover (6) can be moved between a forward position in which, when the vehicle top (3) is closed, the cover (6) adopts a forward closing position in which the cover (6) opens a passage gap (10) behind and adjacent to the cover (6) which is needed for the closed vehicle top (3), and a rear position in which, when the vehicle top (3) is open, the cover (6) adopts a rear closing position in which the cover (6) closes the said passage gap (10).

5. Cover device according to Claim 4,
**characterised in that**
- the first drive mechanism (19) drives the cover (6) for its movement between the said forward position and the said rear position essentially along the direction of the vehicle's longitudinal axis (8),
- and the second drive mechanism (24) is kinematically coupled with the first drive mechanism (19) in such manner that a movement of the cover (6) from its rear position to its forward position swivels the respective lateral flaps (11) into their passive position and a movement of the cover (6) from its forward position to its rear position swivels the respective lateral flaps (11) outwards into their active position.

6. Cover device according to any of Claims 1 to 5,
**characterised in that**
the abutment (25) consists of a step formed around the periphery on the passage opening (12).

## Revendications

1. Dispositif de couverture pour un logement de capote (2) d'un véhicule cabriolet (1) servant à ranger un toit de véhicule (3), présentant
◆ un couvercle (6) qui est logé de manière à pouvoir être réglé en pivotement autour d'un axe de couvercle (7) s'étendant horizontalement et transversalement à l'axe longitudinal du véhicule (8) entre une position fermée, dans laquelle il s'étend essentiellement dans un plan horizontal et ferme une ouverture de logement de capote (4), et une position ouverte, dans laquelle il est incliné par rapport au plan horizontal et ouvre l'ouverture de logement de capote (4),
◆ deux hayons latéraux (11) disposés sur des côtés du couvercle (6) opposés transversalement à l'axe longitudinal du véhicule (8), qui peuvent être réglés entre une position passive, dans laquelle ils ouvrent, en position fermée du couvercle (6), sur chaque côté du véhicule, respectivement une ouverture de passage (12) contiguë latéralement au couvercle (6) et nécessaire au toit de véhicule fermé (3), et s'étendent sur ou sous le couvercle (6), pivotés vers l'intérieur, parallèlement à celui-ci, et une position active, dans laquelle ils ferment dans la position fermée du couvercle (6) les ouvertures de passage (12) et s'étendent dans le plan du couvercle (6),
◆ un premier dispositif d'entraînement (19) qui entraîne le couvercle (6) pour le réglage en pivotement autour de l'axe de couvercle (7),
◆ un deuxième dispositif d'entraînement (24) qui entraîne au moins l'un des hayons latéraux (11) pour le réglage en pivotement autour d'un axe de hayon (13) afférent, s'étendant perpendiculairement au couvercle (6),
◆ les deux hayons latéraux (11) étant logés respectivement par le biais d'un ensemble de palier (14) sur le couvercle (6) de telle sorte que chaque hayon latéral (11) puisse être abaissé par rapport au couvercle (6) et puisse être amené à pivoter dans la position abaissée autour de l'axe de hayon (13) afférent,
◆ le deuxième dispositif d'entraînement (24) entraînant les hayons latéraux (11) exclusivement pour le réglage en pivotement autour des axes de hayon (13),
◆ les hayons latéraux (11) étant logés et disposés de telle sorte que l'abaissement des hayons latéraux (11) soit automatiquement effectué lors de l'ouverture du couvercle (6),
**caractérisé en ce que**
◆ les ensembles de palier sont réalisés respectivement comme des paliers coulissants de pivotement (14),
◆ les paliers coulissants de pivotement (14) présentent respectivement une douille (15) cylindrique qui est enfichée de manière à se déplacer axialement et à tourner sur un boulon (16) cylindrique,
◆ la douille (15) ou le boulon (16) est fixé(e) sur le dessous du couvercle (6) et dépasse perpendiculairement de celui-ci, alors que le boulon (16) ou la douille (15) est fixé(e) sur le hayon latéral (11) correspondant,
◆ le boulon (16) et la douille (15) sont disposés respectivement concentriquement par rapport à l'un des axes de hayon (13),
◆ la douille respective (15) est disposée de manière librement réglable dans le sens axial sur le boulon (16) afférent,
◆ dans la zone des ouvertures de passage (12) pour chaque hayon latéral (11) est prévu au moins un appui (25) fixe, sur lequel le hayon latéral (11) respectif, pivoté dans sa position active, vient s'appuyer lors de l'abaissement du couvercle (6) dans la position fermée, et qui lève le hayon latéral (11) le long de l'axe de hayon (13) dans le plan du couvercle (6).

2. Dispositif de couverture selon la revendication 1, **caractérisé en ce que** les hayons latéraux (11) sont logés et disposés de telle sorte que l'abaissement des hayons latéraux (11) s'effectue lors de l'ouverture du couvercle (16) par la force de gravité, la force élastique d'un ressort ou la force de résistance d'une butée ou d'une coulisse de guidage.

3. Dispositif de couverture selon la revendication 1 ou 2, **caractérisé que** le deuxième dispositif d'entraînement (24) est couplé en entraînement directement ou indirectement au couvercle (6) et/ou au premier dispositif d'entraînement (19) de sorte, que lors d'un réglage du couvercle (6), les hayons latéraux (11) soient entraînés de manière forcée.

4. Dispositif de couverture selon l'une quelconque des revendications 1 à 3, **caractérisé en ce que** le couvercle (6) peut être réglé entre une position avant, dans laquelle le couvercle (6) occupe, lorsque le toit (3) du véhicule est fermé, une position fermée avant, dans laquelle le couvercle (6) ouvre une fente de passage (10) à l'arrière, contiguë au couvercle (6) et nécessaire au toit du véhicule (3) fermé, et une position arrière, dans laquelle le couvercle (6) occupe, lorsque le toit du véhicule (3) est ouvert, une position fermée arrière, dans laquelle le couvercle (6) ferme la fente de passage (10).

5. Dispositif de couverture selon la revendication 4, **caractérisé en ce que**
◆ le premier dispositif d'entraînement (19) entraîne le couvercle (6), pour le réglage entre la position avant et la position arrière, essentiellement dans le sens de l'axe longitudinal du véhicule (8),
◆ le deuxième dispositif d'entraînement (24) est couplé cinématiquement au premier dispositif d'entraînement (19) de telle sorte qu'un réglage du couvercle (6) de sa position arrière à sa position avant pivote vers l'intérieur le hayon latéral (11) respe correspondant ctif dans sa position passive, et qu'un réglage du couvercle (6) de sa position avant à sa position arrière pivote vers l'extérieur le hayon latéral (11) correspondant dans sa position active.

6. Dispositif de couverture selon l'une quelconque des revendications 1 à 5, **caractérisé en ce que** l'appui (25) est formé par un palier réalisé sur un bord (9) de l'ouverture de passage (12).
